# EUROPÄISCHE PATENTANMELDUNG

(11) **EP 3 091 181 A1**
(43) Veröffentlichungstag der Anmeldung: **09.11.2016**
(21) Anmeldenummer: 15166391.1
(22) Anmeldetag: 05.05.2015
(51) Int. Cl.: F01D 5/16, F01D 5/26, F04D 29/66, F16F 15/14

(54) **SCHAUFEL FÜR EINE TURBOMASCHINE UND ZUGEHÖRIGES HERSTELLUNGSVERFAHREN**

(71) Anmelder: MTU Aero Engines AG, 80995 München (DE)
(72) Erfinder: Dr. Hartung, Andreas, 81829 München (DE)

(57) **Zusammenfassung**

Die vorliegende Erfindung betrifft eine Schaufel, insbesondere Laufschaufel, für eine Turbomaschine, insbesondere eine Gasturbine, mit einem Schaufelblatt (10) zur Umlenkung eines Arbeitsfluids mit einer Druckseite (11) und einer Saugseite, die in einer Vorder- und einer Hinterkante (12, 13) verbunden sind, und einem Schaufelfuß (20), wobei in der Schaufel ein radialer Kanal (6) ausgebildet ist, in den ein Impulskörper (3) und ein Anschlagmittel (40.1-40.N; 41, 42) durch eine schaufelfußseitige Einführöffnung (23) eingeführt sind, durch das der Impulskörper mit Bewegungsspiel (s) in Axial- und/oder Umfangsrichtung schaufelfußseitig abgestützt ist. Ein zugehöriges Herstellungsverfahren wird ebenfalls präsentiert.

## Beschreibung

Die Arbeiten, die zu dieser Erfindung geführt haben, wurden gemäß der Finanzhilfevereinbarung Nr. CSJU-GAM-SAGE-2008-001 im Zuge des Siebten Rahmenprogramms der Europäischen Union (FP7/2007-2013) für Clean Sky Joint Technology Initiative gefördert.

Die vorliegende Erfindung betrifft eine Schaufel, insbesondere eine Laufschaufel, für eine Turbomaschine, insbesondere eine Gasturbine, eine Turbomaschine, insbesonderen Gasturbine, mit wenigstens einer solchen Schaufel sowie ein Verfahren zum Herstellen einer solchen Schaufel.

Aus der GB 2 322 426 A1 ist eine Propellerschaufel mit einem radialen Kanal bekannt, in den zur dissipativen Dämpfung von Torsionsmoden durch eine schaufelspitzenseitige Einführöffnung ein Dämpfungskörper eingeführt und spielfrei durch O-Ringe elastisch in dem Kanal befestigt ist.

Eine Aufgabe einer Ausführung der vorliegenden Erfindung ist es, das Betriebsverhalten von Turbomaschinen, insbesondere Gasturbinen, zu verbessern.

Diese Aufgabe wird durch eine Schaufel mit den Merkmalen des Anspruchs 1 gelöst. Ansprüche 14, 15 stellen eine Turbomaschine mit einer oder mehreren hier beschriebenen Schaufeln bzw. ein Verfahren zum Herstellen einer hier beschriebenen Schaufel unter Schutz. Vorteilhafte Ausführungsformen der Erfindung sind Gegenstand der Unteransprüche.

Nach einem Aspekt der vorliegenden Erfindung weist eine Schaufel für eine Turbomaschine, insbesondere wenigstens eine Schaufel einer Turbomaschine, ein Schaufelblatt zur Umlenkung eines Arbeitsfluids mit einer Druck- und einer Saugseite, die in einer Vorder- und einer Hinterkante verbunden sind, und einem Schaufelfuß auf.

In einer Ausführung ist die Schaufel eine Laufschaufel, die mit einem drehbar gelagerten Rotor der Turbomaschine lösbar, insbesondere form- und/oder reibschlüssig, oder dauerhaft, insbesondere stoffschlüssig, verbindbar, insbesondere verbunden oder integral damit ausgebildet ist bzw. wird. In einer anderen Ausführung ist die Schaufel eine Leitschaufel, die mit einem Gehäuse der Turbomaschine lösbar, insbesondere form- und/oder reibschlüssig, oder dauerhaft, insbesondere stoffschlüssig, verbindbar, insbesondere verbunden oder integral damit ausgebildet ist bzw. wird.

In einer Ausführung ist die Turbomaschine eine Gasturbine, insbesondere eine Flugtriebwerk-Gasturbine.

Der Schaufelfuß weist in einer Ausführung ein Deckband bzw. eine Plattform und/oder einen Befestigungsabschnitt, insbesondere zur lösbaren, insbesondere form- und/oder reibschlüssigen, oder dauerhaften, insbesondere stoffschlüssigen, Verbindung mit dem Rotor oder Gehäuse, auf. Das Deckband kann, insbesondere bei einer Laufschaufel, ein radial inneres bzw. Innendeckband oder, insbesondere bei einer Leitschaufel, ein radial äußeres bzw. Außendeckband sein. Der Befestigungsabschnitt kann in einer Ausführung ein oder mehrere Absätze aufweisen und/oder auf der dem Schaufelblatt gegenüberliegenden Seite des Deckbandes angeordnet sein. Er kann insbesondere ein tannenbaumartiges Profil aufweisen.

Das Schaufelblatt kann ebenfalls ein Deckblatt aufweisen, insbesondere bei einer Laufschaufel ein radial äußeres Deckblatt bzw. bei einer Leitschaufel ein radial inneres Deckblatt. Gleichermaßen kann die Schaufel ein deckbandloses Schaufelblatt aufweisen. Eine Schaufelblatthöhe kann insbesondere von dem Schaufelfuss, insbesondere dessen Deckband bzw. Plattform, bis zur Schaufelblattspitze bzw. der dem Schaufelfuß gegenüberliegenden Seite eines Deckbands des Schaufelblatts gemessen bzw. definiert werden bzw. sein.

In einer Ausführung wird bzw. ist in der Schaufel, insbesondere ihrem Schaufelblatt und/oder -fuß, ein, insbesondere gerader bzw. geradliniger, radialer Kanal ausgebildet. Ein radialer Kanal im Sinne der vorliegenden Erfindung erstreckt sich insbesondere (auch) in Radialrichtung der Turbomaschine, insbesondere kann eine Kanallängs- bzw. -erstreckungsrichtung des radialen Kanals, mit einer Drehachse der Turbomaschine einen Winkel einschließen, der wenigstens 70°, insbesondere wenigstens 80°, und/oder höchstens 110°, insbesondere höchstens 100°, beträgt.

Allgemein sei darauf hingewiesen, dass sich - sofern sich aus dem konkreten Kontext nichts Gegenteiliges ergibt - die Begriffe "radial" bzw. "Radialrichtung", "axial" bzw. "Axialrichtung" und "Umfangsrichtung" stets auf die Drehachse der Turbomaschine beziehen, wenn die Schaufel bestimmungsgemäß in dieser montiert ist.

In einer Ausführung wird bzw. ist die Schaufel, insbesondere ihr Schaufelblatt und/oder -fuß, als Voll(material)körper bzw. massiv hergestellt, insbesondere durch Urformen, insbesondere Gießen. In einer Weiterbildung wird bzw. ist der Kanal materialabtragend, insbesondere spanend, hergestellt, insbesondere gebohrt.

In einer anderen Ausführung wird bzw. ist die Schaufel, insbesondere ihr Schaufelblatt und/oder -fuß, hohl hergestellt, insbesondere durch Fügen oder Urformen, insbesondere Schweißen oder Gießen, bzw. weist (wenigstens) einen Hohlraum bzw. Kavität auf. Der Kanal kann dann in einer Weiterbildung, wenigstens teilweise, durch diesen Hohlraum gebildet sein bzw. werden. Der Kanal kann insbesondere beim Urformen der Schaufel hergestellt werden bzw. sein.

In einer Ausführung werden bzw. sind in den Kanal, insbesondere nacheinander, ein Impulskörper und ein Anschlagmittel durch eine schaufelfußseitige Einführöffnung eingeführt.

In einer Ausführung wird bzw. ist die Eintrittsöffnung in dem Deckband des Schaufelfußes angeordnet. Hierdurch kann in einer Ausführung vorteilhaft eine radiale Kanallänge bzw.-höhe reduziert werden. In einer anderen Ausführung ist die Eintrittsöffnung in dem Befestigungsabschnitt des Schaufelfußes angeordnet, insbesondere in einer dem Schaufelblatt gegenüberliegenden (radialen) Stirnseite des Schaufelfußes. Hierdurch kann in einer Ausführung vorteilhaft der Zugang zum Kanal erleichtert und/oder der Kanal durch Befestigen des Befestigungsabschnitts, gegebenenfalls zusätzlich, verschlossen werden bzw. sein.

In einer Ausführung ist bzw. wird der Impulskörper mit Bewegungsspiel in Axial- und/oder Umfangsrichtung der Turbomaschine in dem Kanal aufgenommen und durch das Anschlagmittel schaufelfußseitig bzw. zum Schaufelfuß hin abgestützt, insbesondere bei einer Laufschaufel nach radial innen, bei einer Leitschaufel nach radial außen.

Durch einen mit Bewegungsspiel in Axial- und/oder Umfangsrichtung der Turbomaschine in dem Kanal, in einer Ausführung ungebunden bzw. -fesselt, aufgenommenen Impulskörper kann in einer Ausführung vorteilhaft eine Verstimmung einer oder mehrerer Torsionsmoden der Schaufel erreicht werden: im Unterschied zu einer dissipativen Dämpfung führt der Impulskörper im Betrieb, insbesondere elastische, Stöße mit der Schaufel aus bzw. ist hierzu eingerichtet. Es hat sich herausgestellt, dass durch solche Stoßkontakte eine vorteilhafte (Torsions)Modenverstimmung der Schaufel erreicht werden kann.

In einer Ausführung ist der Impulskörper kugel- oder zylinderförmig und/oder weist eine Masse von wenigstens 0,01 g und/oder höchstens 0,075 g auf. Zusätzlich oder alternativ beträgt in einer Ausführung eine Dichte des Impulskörpers höchstens 80%, insbesondere höchstens 70%, einer Dichte des Schaufelblatts. Hierdurch kann eine besonders vorteilhafte Verstimmung erreicht werden.

Durch das Anschlagmittel wird bzw. ist der durch die Einführöffnung eingeführte Impulskörper in einer Ausführung vorteilhaft von der Einführöffnung radial beabstandet, er kann so insbesondere vorteilhaft in einer zur Verstimmung einer bestimmten Torsionsmode günstigen radialen Lage bzw. Höhe der Schaufel angeordnet werden. Entsprechend ist eine dem Impulskörper zugewandte Stirnfläche des Anschlagmittels in einer Ausführung auf einer radialen Höhe der Schaufel angeordnet, in der eine Amplitude einer, insbesondere ersten, zweiten oder dritten. Torsionsmode bzw. -eigenform der Schaufel, insbesondere des Schaufelblattes, wenigstens 50%, insbesondere wenigstens 75%, vorzugsweise wenigstens 90%, einer maximalen Amplitude der Torsionseigenform der Schaufel, insbesondere des Schaufelblattes, aufweist.

In einer Ausführung weist das, dann entsprechend mehrteilige, Anschlagmittel mehrere, insbesondere wenigstens zwei, wenigstens drei oder mehr, Körper auf, die radial gegeneinander beweglich sind. Ein oder mehrere Körper des Anschlagmittels sind in einer Ausführung, wenigstens im Wesentlichen, kugel- oder zylinderförmig und/oder baugleich mit dem Impulskörper. Hierdurch kann in einer Ausführung die Herstellung bzw. Befüllung der Schaufel vereinfacht, insbesondere eine Verwechslung von baulich unterschiedlichen Impulskörpern und Körper des Anschlagmittels vermieden werden. Zusätzlich oder alternativ können Körper des Anschlagmittels vorteilhaft als (weitere) Impulskörper fungieren bzw. ausgelegt sein, insbesondere zur Verstimmung von Biege- und/oder (weiteren) Torsionsmoden. In einer Ausführung ist auf einer radialen Höhe der Schaufel (jeweils) nur (maximal) ein Impulskörper angeordnet. Hierdurch kann in einer Ausführung die Verstimmung verbessert werden.

Zusätzlich oder alternativ kann das, insbesondere einteilige, Anschlagmittel in einer Ausführung einen oder mehrere, insbesondere zylinderförmige, Stifte aufweisen, insbesondere hieraus bestehen, deren Abmessung in Kanallängsrichtung in einer Ausführung wenigstens das Doppelte, insbesondere das Fünffache, ihrer Abmessung senkrecht hierzu beträgt. Durch einen oder mehrere solcher, insbesondere schlanken, Stifte kann der Impulskörper in einer Ausführung besonders vorteilhaft von der Einführöffnung beabstandet werden. Der bzw. wenigstens einer der Stifte weist in einer Ausführung einen ring- oder (voll)kreis(scheiben)förmigen Querschnitt auf. Der bzw. wenigstens einer der Stifte kann über seiner ganzen Länge oder (Teil)Abschnitten hiervon hohl oder massiv ausgebildet sein. Gleichermaßen kann der bzw. wenigstens einer der Stifte wenigstens abschnittsweise auch andere, insbesondere kreuzförmige, Querschnitte aufweisen.

Zusätzlich oder alternativ kann das, insbesondere einteilige, Anschlagmittel in einer Ausführung eine Hülse aufweisen, in der der Impulskörper mit Bewegungsspiel in Axial- und/oder Umfangsrichtung der Turbomaschine aufgenommen ist.

Somit kann der Impulskörper in einer Ausführung in Axial- und/oder Umfangsrichtung der Turbomaschine mit dem in der bzw. durch die Schaufel ausgebildeten Kanal selber bzw. direkt oder mit der Hülse bzw. über diese (indirekt) mit dem Kanal bzw. der Schaufel Stöße ausführen bzw. hierzu vorgesehen bzw. eingerichtet sein.

Die Hülse kann in einer Ausführung mit dem bzw. einem Stift des Anschlagmittels verbunden oder integral ausgebildet sein. In einer Ausführung ist die Hülse schaufelfußabgewandt bzw. zu einer der Einführöffnung gegenüberliegenden Stirnseite des Kanals hin offen, was das Aufnehmen des Impulskörpers in die Hülse erleichtern kann. In einer anderen Ausführung ist bzw. wird die Hülse, insbesondere nach Aufnehmen des Impulskörpers, schaufelfußabgewandt bzw. zu einer der Einführöffnung gegenüberliegenden Stirnseite des Kanals hin geschlossen, was eine vorteilhaft auch in Kanallängsrichtung geschlossene Stoßkammer definieren kann.

Somit kann der Impulskörper in einer Ausführung in Kanallängsrichtung von der Einführöffnung weg mit dem in der Schaufel ausgebildeten Kanal selber bzw. direkt oder mit der Hülse bzw. über diese (indirekt) mit dem Kanal bzw. der Schaufel Stöße ausführen oder auch geführt werden bzw., insbesondere fliehkraftbedingt, anliegen bzw. hierzu vorgesehen bzw. eingerichtet sein.

In einer Ausführung wird bzw. ist das Anschlagmittel, insbesondere ein oder mehrere der in Kanallängsrichtung gegeneinander beweglichen Körper und/oder der Stift bzw. einer der Stifte in dem Kanal in Axial- und/oder Umfangsrichtung der Turbomaschine form-, reibund/oder stoffschlüssig oder mit Bewegungsspiel angeordnet. Durch eine form-, reibund/oder stoffschlüssige Anordnung kann vorteilhaft das Anschlagmittel fixiert werden bzw. sein, insbesondere zusätzlich oder alternativ zu einem nachfolgend näher erläuterten Verschluss. Durch ein mit Bewegungsspiel angeordnetes Anschlagmittel kann das Herstellen der Schaufel, insbesondere das Befüllen des Kanals, vereinfacht werden und/oder das Anschlagmittel, insbesondere die beweglichen Körper, zusätzlich vorteilhaft als (weitere) Impulskörper fungieren.

In einer Ausführung beträgt eine, insbesondere minimale und/oder maximale, Erstreckung des Anschlagmittels in Kanallängsrichtung, insbesondere zwischen einer impulskörperseitigen bzw. -nächsten Stirnseite und einer impulskörperfern(st)en Stirnseite des Anschlagmittels, wenigstens das Doppelte, insbesondere wenigstens das Fünffache, einer, insbesondere minimalen und/oder maximalen, Erstreckung des Impulskörpers in Kanallängsrichtung.

Zusätzlich oder alternativ beträgt in einer Ausführung eine, insbesondere minimale und/oder maximale, Erstreckung des Anschlagmittels in Kanallängsrichtung, insbesondere zwischen einer impulskörperseitigen bzw. -nächsten Stirnseite und einer impulsköiperfern(st)en Stirnseite des Anschlagmittels, wenigstens 25%, insbesondere wenigstens 50%, insbesondere wenigstens 75%, einer, insbesondere minimalen und/oder maximalen, Erstreckung in Kanallängsrichtung und/oder radialen Höhe des Schaufelfußes und/oder des Schaufelblatts, insbesondere einer (gemeinsamen bzw. Gesamt)Erstreckung bzw. radialen Höhe des Schaufelfußes und Schaufelblatts zusammen.

Hierdurch kann in einer Ausführung der Impulskörper vorteilhaft (vor)positioniert werden.

In einer Ausführung wird bzw. ist der Kanal durch einen Verschluss, insbesondere Stopfen bzw. Deckel, teilweise oder vollständig ge- bzw. verschlossen. In einer Weiterbildung wird bzw. ist der Verschluss an, insbesondere in, der Einführöffnung angeordnet und, insbesondere stoff-, form- und/oder reibschlüssig, befestigt, insbesondere durch Schweißen, Löten oder Kleben. Hierdurch kann vorteilhaft eine, wenigstens im Wesentlichen, ungestörte Außenkontur der Schaufel im Bereich der Einführöffnung erreicht werden. In einer anderen Weiterbildung wird bzw. ist der Verschluss von der Einführöffnung radial beabstandet in dem Kanal angeordnet und, insbesondere stoff-, form- und/oder reibschlüssig, in dem Kanal befestigt, insbesondere durch Schweißen, Löten oder Kleben.

In einer Ausführung wird bzw. ist der Verschluss, insbesondere stoff-, form- und/oder reibschlüssig, mit dem Anschlagmittel verbunden oder integral mit diesem ausgebildet. Hierdurch kann das Anschlagmittel vorteilhaft gehandhabt und/oder, insbesondere zusätzlich, festgelegt werden.

In einer Ausführung wird bzw. ist der Impulskörper in einer schaufelfußabgewandten Hälfte, insbesondere einem schaufelfußabgewandten Drittel, insbesondere einem schaufelfußabgewandten Viertel, des Schaufelblatts bzw. seiner radialen Höhe angeordnet. Mit anderen Worten wird bzw. ist der Impulskörper in einer Ausführung in einer radial äußeren Hälfte, insbesondere einem radial äußer(st)en Drittel, insbesondere einem radial äußer(st)en Viertel, des Schaufelblatts der Laufschaufel bzw. einer radial inneren Hälfte, insbesondere einem radial inner(st)en Drittel, insbesondere einem radial inner(st)en Viertel, des Schaufelblatts der Leitschaufel angeordnet. In einer anderen Ausführung wird bzw. ist der Impulskörper umgekehrt in einer schaufelfußzugewandten Hälfte, insbesondere einem schaufelfußzugewandten Drittel, insbesondere einem schaufelfußzugewandten Viertel, des Schaufelblatts bzw. seiner radialen Höhe angeordnet.

Zusätzlich oder alternativ wird bzw. ist der Impulskörper in einer Ausführung in einer vorderkantenzugewandten Hälfte, insbesondere einem vorderkantenzugewandten Drittel, insbesondere einem vorderkantenzugewandten Viertel, des Schaufelblatts bzw. seiner Erstreckung in axialer Richtung der Turbomaschine und/oder Sehnenlänge angeordnet. Mit anderen Worten wird bzw. ist der Impulskörper in einer Ausführung in einer axial vorderen Hälfte, insbesondere einem axial vorder(st)en Drittel, insbesondere einem axial vorder(st)en Viertel, des Schaufelblatts bzw. in der Nähe seiner Vorderkante angeordnet. In einer anderen Ausführung wird bzw. ist der Impulskörper umgekehrt in einer vorderkantenab- bzw. hinterkantenzugewandten Hälfte, insbesondere einem vorderkantenab- bzw. hinterkantenzugewandten Drittel, insbesondere einem vorderkantenab- bzw. hinterkantenzugewandten Viertel, des Schaufelblatts angeordnet.

Hierdurch können in einer Ausführung insbesondere Torsionsmoden besonders vorteilhaft verstimmt werden.

In einer Ausführung weist der Impulskörper zwischen dem Anschlagmittel und einem diesem gegenüberliegenden, insbesondere schaufelfesten, weiteren radialen Anschlag ein Bewegungsspiel in Kanallängsrichtung auf. Der Impulskörper kann in einer Ausführung, insbesondere fliehkraftbedingt, an dem weiteren radialen Anschlag anliegen oder mit diesem Stöße ausführen bzw. hierzu vorgesehen bzw. eingerichtet sein.

In einer Ausführung beträgt das Bewegungsspiel des Impulskörpers in Axial-, Umfangs- und/oder Kanallängsrichtung wenigstens 0,01 mm, insbesondere wenigstens 0,1 mm, und/oder höchstens 2 mm, insbesondere höchstens 1,5 mm. Hierdurch kann in einer Ausführung eine besonders vorteilhafte Verstimmung von Torsionsmoden erreicht werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Laufschaufel einer Gasturbine nach einer Ausführung der vorliegenden Erfindung in einer Draufsicht in Umfangsrichtung;
- Fig. 2: eine Laufschaufel einer Gasturbine nach einer weiteren Ausführung der vorliegenden Erfindung in Fig. 1 entsprechender Ansicht; und
- Fig. 3: eine Laufschaufel einer Gasturbine nach einer weiteren Ausführung der vorliegenden Erfindung in Fig. 1 entsprechender Ansicht.

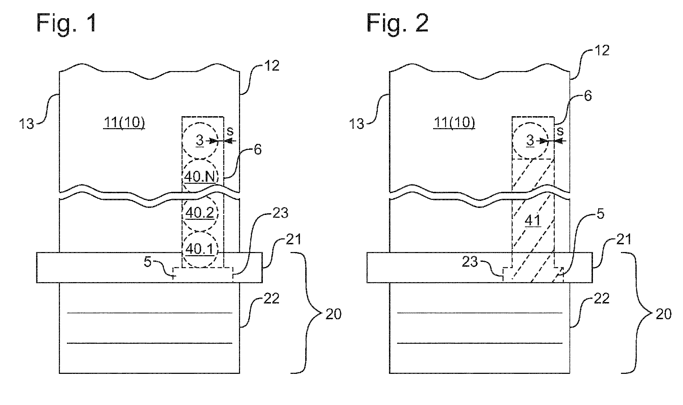

Fig. 1 zeigt eine Laufschaufel einer Turbomaschine, insbesondere einer Flugtriebwerk-Gasturbine, nach einer Ausführung der vorliegenden Erfindung in einer Draufsicht in Umfangsrichtung.

Die Schaufel weist ein Schaufelblatt 10 zur Umlenkung eines Arbeitsfluids mit einer Druckseite 11 und einer dieser in Umfangsrichtung gegenüberliegenden und daher in Fig. 1 nicht sichtbaren Saugseite, die in einer Vorderkante 12 und einer Hinterkante 13 verbunden sind, und einem Schaufelfuß 20 auf.

Der Schaufelfuß 20 weist ein radial inneres bzw. Innendeckband 21 und einen Befestigungsabschnitt 22 mit einem tannenbaumartigen Profil auf. Das Profil könnte jedoch auch andersartig, beispielsweise schwalbenschwanzförmig, ausgebildet sein, solange es geeignet ist, eine formschlüssige Verbindung mit einer komplementär ausgebildeten Nut einer nicht dargestellten Rotorscheibe eingehen zu können.

Das in Fig. 1 nur teilweise dargestellte Schaufelblatt 10 kann ebenfalls ein (radial äußeres) Deckblatt aufweisen oder gleichermaßen deckbandlos sein.

In der Schaufel, insbesondere ihrem Schaufelblatt 10 und dem Innendeckband 21 ihres Schaufelfußes 20, ist ein gerader radialer Kanal 6 ausgebildet, der in der Draufsicht der Fig. 1 gestrichelt angedeutet ist.

In einer Ausführung ist das Schaufelblatt 10 als Vollmaterialkörper bzw. massiv hergestellt, insbesondere durch Urformen, insbesondere Gießen, und der Kanal 6 materialabtragend, insbesondere spanend, hergestellt, insbesondere gebohrt. In einer anderen Ausführung ist das Schaufelblatt 10 hohl hergestellt. Der Kanal 6 kann dann wenigstens teilweise durch diesen Hohlraum gebildet sein.

In den Kanal 6 sind nacheinander ein kugelförmiger Impulskörper 3 und ein Anschlagmittel 40.1 - 40.N durch eine schaufelfußseitige Einführöffnung 23 eingeführt, die in dem Deckband 21 des Schaufelfußes 20 angeordnet ist.

Der Impulskörper 3 ist ungebunden bzw. -fesselt und mit Bewegungsspiel s in Axiahichtung (horizontal in Fig. 1) und Umfangsrichtung (senkrecht auf der Bildebene der Fig. 1) der Flugtriebwerk-Gasturbine in dem Kanal 6 aufgenommen und durch das Anschlagmittel 40.1-40.N schaufelfußseitig bzw. zum Schaufelfuß 20 hin abgestützt, bei der Laufschaufel also nach radial innen (nach unten in Fig. 1).

Die dem Impulskörper 3 zugewandte Stirnfläche (oben in Fig. 1) des Anschlagmittels 40.1-40.N ist auf einer radialen Höhe der Schaufel angeordnet, in der eine Amplitude einer ersten, zweiten oder dritten, Torsionsmode der Schaufel wenigstens 75% einer maximalen Amplitude der Torsionseigenfoim der Schaufel aufweist. Bei der in Fig. 1 dargestellten Ausführungsform wird dabei auf die Lage der dem Impulskörper 3 zugewandte Stirnfläche des Anschlagmittels 40.1 - 40.N abgestellt, die sich ergibt, wenn sich die Schaufel nicht bewegt und der Schaufelfuß 20 vertikal unter dem Schaufelblatt 10 ausgerichtet ist.

In der Ausführung der Fig. 1 weist das mehrteilige Anschlagmittel mehrere kugelförmige Körper 40.1 - 40.N auf, die radial gegeneinander beweglich und baugleich mit dem Impulskörper 3 sind. Damit ist auf einer radialen Höhe der Schaufel jeweils nur maximal ein Impulskörper angeordnet.

Die in Kanallängsrichtung gegeneinander beweglichen Körper 40.1 - 40.N sind mit Bewegungsspiel in Axial- und Umfangsrichtung in dem Kanal angeordnet und können somit vorteilhaft als weitere Impulskörper fungieren.

Eine maximale Erstreckung des Anschlagmittels 40.1 - 40.N in Kanallängsrichtung zwischen einer impulskörperseitigen bzw. -nächsten Stirnseite (oben in Fig. 1) und einer impulskörperfernsten Stirnseite des Anschlagmittels (unten in Fig. 1) beträgt wenigstens das Fünffache einer maximalen Erstreckung des Impulskörpers 3 in Kanallängsrichtung und wenigstens 50% einer maximalen Erstreckung in Kanallängsrichtung und radialen Höhe des Schaufelblatts 10.

Der Kanal 6 ist durch einen Verschluss in Form eines Deckels 5 verschlossen, der an der Einführöffnung 23 angeordnet und, insbesondere stoff-, form- und/oder reibschlüssig, befestigt ist, insbesondere durch Schweißen, Löten oder Kleben.

Der Impulskörper 3 ist in einer schaufelfußabgewandten bzw. radial äußeren Hälfte des Schaufelblatts 10 bzw. seiner radialen Höhe und in einem vorderkantenzugewandten bzw. axial vordersten Viertel (rechts in Fig. 1) des Schaufelblatts 10 angeordnet.

Der Impulskörper 3 weist zwischen dem Anschlagmittel 40.1 - 40.N und einem diesem gegenüberliegenden schaufelfesten weiteren radialen Anschlag ebenfalls ein Bewegungsspiel in Kanallängsrichtung auf.

Das Bewegungsspiel s des Impulskörpers 3 in Axial- und Umfangsrichtung beträgt zwischen 0,1 mm und 1,5 mm.

Fig. 2 zeigt eine Laufschaufel einer Turbomaschine, insbesondere einer Flugtriebwerk-Gasturbine, nach einer weiteren Ausführung der vorliegenden Erfindung in Fig. 1 entsprechender Ansicht. Einander entsprechende Merkmale sind durch identische Bezugszeichen identifiziert, so dass auf die vorstehende Beschreibung Bezug genommen und nachfolgend auf Unterschiede eingegangen wird.

In der Ausführung der Fig. 2 besteht das Anschlagmittel aus einem schlanken Stift 41, dessen Abmessung in Kanallängsrichtung (vertikal in Fig. 2) wenigstens das Fünffache seiner Abmessung senkrecht hierzu beträgt.

Der Stift 41 ist in dem Kanal 6 in Axial- und Umfangsrichtung form- oder reibschlüssig angeordnet und dadurch fixiert

Der Verschluss 5 ist integral mit dem Stift 41 ausgebildet.

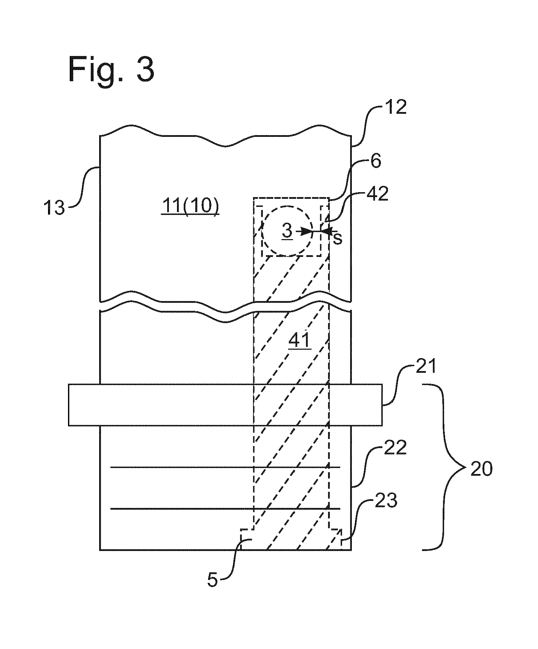

Fig. 3 zeigt eine Laufschaufel einer Turbomaschine, insbesondere einer Flugtriebwerk-Gasturbine, nach einer weiteren Ausführung der vorliegenden Erfindung in Fig. 1, 2 entsprechender Ansicht. Einander entsprechende Merkmale sind durch identische Bezugszeichen identifiziert, so dass auf die vorstehende Beschreibung Bezug genommen und nachfolgend auf Unterschiede eingegangen wird.

In der Ausführung der Fig. 3 ist der Impulskörper 3 mit Bewegungsspiel s in Axial- und Umfangsrichtung der Flugtriebwerk-Gasturbine in einer Hülse 42 des Anschlagmittels aufgenommen, die mit dem Stift 41 stoffschlüssig verbunden oder integral ausgebildet und schaufelfußabgewandt bzw. zu einer der Einführöffnung 23 gegenüberliegenden Stirnseite des Kanals 6 hin (nach oben in Fig. 3) offen ist.

Des Weiteren ist in der Ausführung der Fig. 3 die Eintrittsöffnung 23 in einer dem Schaufelblatt 10 gegenüberliegenden radialen Stirnseite (unten in Fig. 3) des Befestigungsabschnitts 22 des Schaufelfußes 20 angeordnet. Diese Ausführungsform ist insbesondere dann von Vorteil, wenn die Schaufel eine Hohlschaufel ist, bei welcher der Kanal 6 zumindest abschnittsweise durch die bestehende Kavität der Schaufel gebildet wird und somit nicht nachträglich, zum Beispiel durch eine Bohrung, eingebracht werden muss. Um in diesem Fall zu verhindern, dass der Impulskörper 3 innerhalb der Kavität der Hohlschaufel unkontrolliert wandern kann, wird der Bewegungsspielraum bei dieser Ausführungsform im Wesentlichen durch die Ausgestaltung der Hülse 42 definiert. Es kann auch daran gedacht werden, das radial äußere Ende (oben in Fig. 3) der Hülse, zum Beispiel stoff-, form- oder reibschlüssig, zu verschließen, um den gewünschten Bewegungsspielraum des Impulskörpers 3 vollständig durch Hülse 42 zu definieren. In einem solchen Fall ist es noch nicht einmal notwendig, dass die Kavität der Hohlschaufel einen Anschlag für den Impulskörper nach radial außen an entsprechender Stelle bereitstellt.

Obwohl in der vorhergehenden Beschreibung exemplausche Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplauschen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Schaufelblatt
- 11: Druckseite
- 12: Vorderkante
- 13: Hinterkante
- 20: Schaufelfuß
- 21: Innendeckband
- 22: Befestigungsabschnitt
- 23: Einführöffnung
- 3: Impulskörper
- 40.1...40.N: in Kanallängsrichtung bewegliche Körper (Anschlagmittel)
- 41: Stift (Anschlagmittel)
- 42: Hülse (Anschlagmittel)
- 5: Verschluss
- 6: Kanal
- s: Bewegungsspiel

## Patentansprüche

1. Schaufel, insbesondere Laufschaufel, für eine Turbomaschine, insbesondere eine Gasturbine, mit einem Schaufelblatt (10) zur Umlenkung eines Arbeitsfluids mit einer Druckseite (11) und einer Saugseite, die in einer Vorder- und einer Hinterkante (12, 13) verbunden sind, und einem Schaufelfuß (20), wobei in der Schaufel ein radialer Kanal (6) ausgebildet ist, in den ein Impulskörper (3) und ein Anschlagmittel (40.1-40.N; 41, 42) durch eine schaufelfußseitige Einführöffnung (23) eingeführt sind, durch das der Impulskörper (3) mit Bewegungsspiel (s) in Axial- und/oder Umfangsrichtung schaufelfußseitig abgestützt ist.

2. Schaufel nach dem vorhergehenden Anspruch, **dadurch gekennzeichnet, dass** das Anschlagmittel mehrere radial gegeneinander bewegliche Körper (40.1-40.N) und/oder einen Stift (41) und/oder eine, insbesondere schaufelfußabgewandt offene, Hülse (42), in der der Impulskörper (3) mit Bewegungsspiel (s) in Axial- und/oder Umfangsrichtung aufgenommen ist, aufweist.

3. Schaufel nach dem vorhergehenden Anspruch, **dadurch gekennzeichnet, dass** das Anschlagmittel in dem Kanal in Axial- und/oder Umfangsrichtung form-, reib- und/oder stoffschlüssig oder mit Bewegungsspiel angeordnet ist.

4. Schaufel nach einem der vorhergehenden Ansprüche, **dadurch gekennzeichnet, dass** eine Erstreckung des Anschlagmittels (40.1-40.N; 41, 42) in Kanallängsrichtung wenigstens das Doppelte einer Erstreckung des Impulskörpers (3) in Kanallängsrichtung und/oder wenigstens 25% einer Erstreckung des Schaufelfußes und/oder -blatts (10, 20) in Kanallängsrichtung beträgt.

5. Schaufel nach einem der vorhergehenden Ansprüche, **gekennzeichnet durch** einen Verschluss (5) des Kanals.

6. Schaufel nach dem vorhergehenden Anspruch, **dadurch gekennzeichnet, dass** der Verschluss (5) an der Einführöffnung (23) oder radial von dieser beabstandet in dem Kanal (6) angeordnet und, insbesondere stoff-, form- und/oder reibschlüssig, daran befestigt ist.

7. Schaufel nach einem der beiden vorhergehenden Ansprüche, **dadurch gekennzeichnet, dass** der Verschluss (5), insbesondere stoff-, form- und/oder reibschlüssig, mit dem Anschlagmittel (41) verbunden oder integral mit diesem ausgebildet ist.

8. Schaufel nach einem der vorhergehenden Ansprüche, **dadurch gekennzeichnet, dass** der Impulskörper (3) in einer schaufelfuß- und/oder vorderkantenzu- oder -abgewandten Hälfte des Schaufelblatts (10) angeordnet ist.

9. Schaufel nach einem der vorhergehenden Ansprüche, **dadurch gekennzeichnet, dass** der Impulskörper (3) zwischen dem Anschlagmittel (40.1-40.N; 41, 42) und einem diesem gegenüberliegenden, insbesondere schaufelfesten, weiteren radialen Anschlag ein Bewegungsspiel in Kanallängsrichtung aufweist.

10. Schaufel nach einem der vorhergehenden Ansprüche, **dadurch gekennzeichnet, dass** der Schaufelfuß ein Deckband und/oder einen Befestigungsabschnitt aufweist.

11. Schaufel nach dem vorhergehenden Anspruch, **dadurch gekennzeichnet, dass** die Eintrittsöffnung in dem Deckband oder Befestigungsabschnitt angeordnet ist.

12. Schaufel nach einem der vorhergehenden Ansprüche, **dadurch gekennzeichnet, dass** das Bewegungsspiel des Impulskörpers in Axial-, Umfangs- und/oder Kanallängsrichtung wenigstens 0,01 mm und/oder höchstens 2 mm beträgt.

13. Schaufel nach einem der vorhergehenden Ansprüche, **dadurch gekennzeichnet, dass** die Schaufel, insbesondere das Schaufelblatt, hohl oder als Vollmaterialkörper hergestellt ist.

14. Turbomaschine, insbesondere Gasturbine, mit wenigstens einer Schaufel nach einem der vorhergehenden Ansprüche.

15. Verfahren zum Herstellen einer Schaufel nach einem der vorhergehenden Ansprüche, **dadurch gekennzeichnet, dass** der Impulskörper und das Anschlagmittel durch die Einführöffnung in den radialen Kanal eingeführt werden.
